# EUROPÄISCHE PATENTSCHRIFT

(11) **EP 4 350 287 B1**
(45) Veröffentlichungstag und Bekanntmachung des Hinweises auf die Patenterteilung: **28.01.2026**
(21) Anmeldenummer: 22199666.3
(22) Anmeldetag: 04.10.2022
(51) Int. Cl.: G01C 15/02, E04G 21/18

(54) **MARKIERUNGSVORRICHTUNG**
MARKING DEVICE
DISPOSITIF DE MARQUAGE

(43) Veröffentlichungstag der Anmeldung: 10.04.2024
(73) Patentinhaber: Mödder, Manfred, 42759 Heiligenhaus (DE)
(72) Erfinder: Mödder, Manfred, 42759 Heiigenhaus (DE)
(74) Vertreter: Andrejewski - Honke Patent- und Rechtsanwälte Partnerschaft mbB

(56) Entgegenhaltungen:
- AT-U1- 1 746
- DE-A1- 102008 053 953
- DE-U1- 29 915 166
- US-A1- 2020 011 655

## Beschreibung

Die Erfindung betrifft eine Markierungsvorrichtung zur Definition und/oder Hervorhebung eines oder mehrerer Referenzpunkte an einem Objekt im Zuge der Objektvermessung, mit einer Basis, welche mit dem Objekt verbindbar ist, und mit zumindest einem Markierungsträger zur Festlegung des Referenzpunktes, wobei die Basis mittels eines beideseitig klebenden Klebebandes rückstandsfrei festlegbar ist.

Die Objektvermessung spielt eine große Rolle, insbesondere wenn es darum geht, Objekte wie beispielsweise Gebäude, Schiffe etc. zu bauen. Tatsächlich kann im Zuge dieser Objektvermessung überprüft werden, ob der jeweilige Baufortschritt mit den zeichnerischen Vorgaben übereinstimmt. Außerdem kann über die Objektvermessung unschwer die Anbringung von Anbauten, Leitungen aber auch farbigen Ausgestaltungen am Objekt überprüft und vorgegeben werden. Die Objektvermessung als solche ist historisch zunächst mit einem Schnurgerüst sowie elektrooptischen Distanzmessern vorgenommen worden, wie dies in der DE 84 00 153 U1 im Detail beschrieben wird, welche sich mit einem Schnurgerüstreflektorhalter als gleichsam Markierungsvorrichtung beschäftigt.

Heutzutage werden für die Objektvermessung aus der Geodäsie bekannte Tachymeter eingesetzt, um Horizontalrichtungen, Vertikalwinkel und auch eine Schrägstrecke zum Zielpunkt ermitteln zu können. Bei dem Zielpunkt kann es sich um den mithilfe der Markierungsvorrichtung festgelegten Referenzpunkt am Objekt handeln. Im Rahmen der DE 200 21 000 U1 wird in diesem Zusammenhang ein Reflektorhalter zur Aufmessung von Nägeln mit elektronischen Tachymetern als Markierungsvorrichtung im Detail beschrieben.

Ein Positioniersystem zum Erstellen oder Definieren der exakten Position eines Messpunktes bzw. Referenzpunktes auf der Oberfläche eines Objektes umfasst normalerweise eine sogenannte Hauptstation, die einen Entfernungsmesser aufweist. Der Entfernungsmesser sendet im Wesentlichen einen sogenannten Messlichtstrahl aus und arbeitet in der Weise, dass er das fragliche reflektierte modulare Licht zugleich auch empfangen kann und Vergleiche zwischen dem jeweiligen Modulationssignal des ausgesendeten und empfangenen Lichtstrahls durchführt. Dadurch kann auf Vertikalwinkel und Horizontalwinkel und folglich die Ausrichtung des Entfernungsmessers zum zu messenden Objekt rückgeschlossen werden. Weitere Einzelheiten hierzu werden im Detail in der DE 690 05 106 T2 beschrieben.

Um die Markierungsvorrichtung an der richtigen Stelle auf der Oberfläche des Objektes anzubringen, wird meistens eine sogenannte Körnung positioniert und anschließend die Markierungsvorrichtung im Hinblick auf die Körnung ausgerichtet und auf der Oberfläche festgelegt. Ein zu diesem Zweck geeignetes Werkzeug zur Positionierung einer solchen Körnung auf beispielsweise einer Wand wird im Detail in der EP 1 568 965 B1 beschrieben. Dazu wird ein mit einem optischen Reflektor ausgerüsteter Hauptträger mithilfe von Permanentmagneten auf der Wand festgelegt, um mit einem elektronischen Tachymeter zusammenzuwirken. Das Werkzeug umfasst eine Führung, welche die Einführung eines Körners erlaubt, um den Körner auf die Wand zu stoßen und dort den gewünschten Referenzpunkt zu setzen.

Anschließend kann die Markierungsvorrichtung gegenüber dem Körner bzw. der Körnung ausgerichtet und an dem Objekt bzw. dessen Oberfläche festgelegt werden. Dazu sind verschiedene Methoden aus der Praxis bekannt. Typischerweise wird hier so gearbeitet, dass die fragliche Markierungsvorrichtung mit einem Heißkleber auf der Oberfläche des Objektes angebracht wird. Das hat zur Folge, dass sich die Markierungsvorrichtung praktisch nicht (mehr) beschädigungslos von der Oberfläche des Objektes lösen lässt. Eine solche Vorgehensweise ist dann akzeptabel, wenn die Markierungsvorrichtung dauerhaft an ihrem Platz verbleiben soll. Sind jedoch anschließend beispielsweise Beschichtungen durch einen aufzubringenden Teppichboden, eine Tapete oder auch Lackierungen erforderlich und soll die Markierungsvorrichtung entfernt werden, so ist dies nach der in der Praxis verfolgten Vorgehensweise nur mit erheblichem Aufwand bzw. nicht ohne Beschädigungen möglich.

Eine gattungsgemäße Markierungsvorrichtung wird in dem Gebrauchsmuster DE 299 15 166 U1 beschrieben. Hier geht es um eine Markierungsplakette zum Markieren mindestens eines Referenzpunktes oder einer Referenzlinie an Bauwerken. Dazu ist auf mindestens einer Plattenseite ein optische Strahlung hochreflektierendes Feld vorgesehen. Möglichkeiten der Entfernung der Markierungsplakette werden nicht angesprochen.

Eine vergleichbare und ebenfalls gattungsgemäße Markierungsvorrichtung ist Gegenstand der AT 1 746 U1. An dieser Stelle ist eine Lasche zum Ablösen der Markierungsvorrichtung realisiert. Diese birgt allerdings bei einer Anbringung auf dem Boden die Gefahr, dass eine Stolperfalle vorliegt. Hier will die Erfindung insgesamt Abhilfe schaffen.

Der Erfindung liegt das technische Problem zugrunde, eine derartige Markierungsvorrichtung zur Definition eines oder mehrerer Referenzpunkte an einem Objekt im Zuge der Objektvermessung so weiterzuentwickeln, dass die Markierungsvorrichtung bei Bedarf unschwer und möglichst beschädigungsfrei entfernt werden kann.

Zur Lösung dieser technischen Problemstellung schlägt die Erfindung bei einer gattungsgemäßen Markierungsvorrichtung vor, dass die Basis eine randseitige Abschrägung als beispielsweise Stolperschutz aufweist, wobei die Abschrägung wenigstens einen Unterschnitt zum Eingriff für ein Ablösewerkzeug aufweist. - Die Dicke des beidseitig klebenden Klebebandes beträgt im Allgemeinen weniger als 600 µm.

Im Gegensatz zum bisherigen Stand der Technik wird folglich die Basis und damit auch der mit der Basis koppelbare oder gekoppelte Markierungsträger nicht dauerhaft und fest mit dem Objekt bzw. dessen Oberfläche verbunden, beispielsweise durch eine Heißklebung, durch Schrauben oder anderweitige Befestigungsmethoden. Vielmehr erfolgt die Vereinigung von Basis und Objekt bzw. dessen Oberfläche lediglich temporär, weil die Basis über das beidseitig klebende Klebeband rückstandsfrei mit dem Objekt bzw. der Oberfläche des Objektes verbunden wird. Da das an dieser Stelle eingesetzte Klebeband beidseitig klebend ausgebildet ist, kann die Basis und gegebenenfalls der Markierungsträger nach seiner Entfernung vom Objekt bzw. dessen Oberfläche unschwer wiederverwendet werden. Dazu ist es lediglich erforderlich, dass die Basis an ihrer dem Objekt zugewandten Unterseite mit einem neuen beidseitig klebenden Klebeband ausgerüstet wird. Denn dieses lässt sich nicht nur rückstandsfrei von dem Objekt bzw. seiner Oberfläche entfernen, sondern auch von der Unterseite der Basis.

Auf diese Weise wird eine besonders ressourcenschonende Verwendung der erfindungsgemäßen Markierungsvorrichtung zur Verfügung gestellt und realisiert, weil die Basis inklusive Markierungsträger praktisch beliebig oft eingesetzt bzw. wieder eingesetzt werden kann. Das führt zugleich zu verringerten Kosten bei der Ausrüstung eines Objektes mit der erfindungsgemäßen Markierungsvorrichtung. In diesem Zusammenhang versteht es sich, dass das beidseitig klebende Klebeband mit seiner einen Beschichtung aus der Klebemasse an der Unterseite der Basis und mit der anderen gegenüberliegenden Beschichtung der Klebemasse am Objekt jeweils lösbar festgelegt wird. Hierzu kann das betreffende beidseitig klebende Klebeband größenmäßig an die Basis angepasst sein.

Handelt es sich bei der Basis um eine solche, die kreisförmig ausgebildet ist, so ist das beidseitig klebende Klebeband vorteilhaft als Klebepad mit gleicher kreisförmiger Gestalt ausgebildet. Selbstverständlich kann das beidseitig klebende Klebeband auch streifenförmig ausgebildet sein. Außerdem können mehrere der beidseitig klebenden Klebebänder gemeinsam an der Unterseite der Basis festgelegt werden. Für eine besonders innige und dauerhafte Verklebung empfiehlt die Erfindung jedoch, dass das beidseitig klebende Klebeband größenmäßig an die in der Regel kreisförmig ausgebildete Basis angepasst ist.

Das beidseitig klebende Klebeband ist in der Regel und im Detail textilverstärkt ausgelegt. Besonders bevorzugt verfügt das Klebeband über ein Gewebe als entsprechende textile Verstärkung, welches beidseitig mit einer entsprechenden Beschichtung aus der Klebemasse bzw. dem Kleber ausgerüstet ist. Grundsätzlich kann das Gewebe auch in die Klebemasse eingebracht werden. Sofern das Gewebe offenporig ausgebildet ist, dringt die Klebemasse hindurch und ist beidseitig des Gewebes wunschgemäß vorhanden. Das Gewebe ist in diesem Zusammenhang vorteilhaft aus Polypropylen (PP) hergestellt. Grundsätzlich können an dieser Stelle aber auch andere thermoplastische Kunststoffe zum Einsatz kommen, beispielsweise solche aus PET (Polyethylentheraphthalat), PA (Polyamid) um nur einige zu nennen. Bei dem Kleber bzw. der Klebemasse für die beidseitige Beschichtung handelt es sich typischerweise um eine lösungsmittelfreie Acrylatklebemasse.

Solche beidseitig klebenden Klebebänder bzw. doppeltseitige Klebebänder werden typischerweise in Verbindung mit dem Verkleben von Bodenbelägen wie Teppichen oder anderen elastischen Bodenbelägen wie beispielsweise Laminat eingesetzt und finden hier Verwendung. Beispiele für geeignete doppelseitige bzw. beidseitig klebende Klebebänder in diesem Kontext werden in dem ausgelaufenen Patent EP 0 882 420 B1 der Firma tesa beschrieben, auf die ausdrücklich hingewiesen sei. Im Unterschied zum an dieser Stelle vorteilhaft eingesetzten beidseitigen Klebeband ist das dortige doppelseitige Klebeband allerdings nicht mit einer Textilverstärkung ausgerüstet, sondern mit einer Folie als Träger, was vorliegend ebenfalls möglich ist. Bei der Folie kann es sich um eine PET-Folie handeln.

Ein ebenfalls geeignetes beidseitig klebendes Klebeband mit zugleich Textilverstärkung ist darüber hinaus als sogenanntes "Verlegeband rückstandsfrei entfernbar" der Firma tesa mit der Produktkennzeichnung BNR 55729, 55731, 55735 bekannt. Hierauf wird vorteilhaft zurückgegriffen, wenngleich das doppelseitige Klebeband mit dem Folienträger entsprechend der EP 0 882 420 B1 genauso gut geeignet ist.

So oder so sorgt in der Regel der Einsatz von Acrylatklebemassen bzw. Acrylathaftklebemassen in diesem Zusammenhang dafür, dass diese Klebemassen nicht nur weichmacherbeständig sind, sondern sich auch rückstandsfrei von den meisten Oberflächen lösen lassen. Zugleich sind solche Klebemassen im Temperaturbereich üblicher Anwendungen (d. h. von ca. -40 °C bis +80 °C) temperaturbeständig und verfügen grundsätzlich über eine hohe Klebkraft. Tatsächlich lassen sich die betreffenden beidseitig klebenden Klebebänder von üblichen Oberflächen in beispielsweise Häusern, Schiffen etc. einfach entfernen. Bei den fraglichen und hierfür geeigneten Untergründen handelt es sich um Fliesen, Holzböden, Ziegelsteinen, die meisten Kunststoffe, Glas, Acrylglas, Karton, Putz, Papier, Metall, Stahl und Stein, so dass eine universelle Verwendbarkeit im Zusammenhang mit der Definition eines Referenzpunktes an einem Objekt mit einer entsprechenden Oberflächengestaltung gegeben ist.

Dabei kann grundsätzlich - vergleichbar der Lehre nach der EP 0 882 420 B1 - so vorgegangen werden, dass der an dieser Stelle eingesetzte Träger bzw. das Gewebe des beidseitig klebenden Klebebandes mit einem nicht klebenden sogenannten Anfasser ausgerüstet ist. Mithilfe des Anfassers kann das beidseitig bzw. doppelseitig klebende Klebeband und damit auch die Markierungsvorrichtung im Ganzen durch sogenanntes manuelles Strippen bzw. Ziehen parallel zur Oberfläche des Objektes entfernt werden.

Im Regelfall wird jedoch auf einen solchen Anfasser verzichtet. Denn die rückstandsfreie Ablösung der Basis vom Objekt erfolgt erfindungsgemäß mithilfe des Ablösewerkzeuges. Dazu wird das Ablösewerkzeug an dem Unterschnitt bzw. einer Aussparung zum Eingriff für das betreffende Ablösewerkzeug angesetzt.

Der Unterschnitt findet sich dabei in der Abschrägung der Basis. Tatsächlich verfügt die Basis erfindungsgemäß über die randseitige Abschrägung als beispielsweise Stolperschutz. Sofern die Basis kreisförmig ausgebildet ist, handelt es sich bei der Abschrägung um eine Kreisringschräge. Die fragliche Abschrägung ist dabei mit wenigstens dem einen Unterschnitt ausgerüstet, an dem das nachfolgend noch näher zu beschreibende Ablösewerkzeug angesetzt werden kann, um die Basis rückstandsfrei vom Objekt bzw. dessen Oberfläche ablösen zu können.

Die Basis selbst ist im Allgemeinen aus einem thermoplastischen Kunststoff hergestellt. Gleiches kann für den Markierungsträger gelten. Dabei wird im Rahmen einer Variante so vorgegangen, dass die Basis und der Markierungsträger einstückig aus dem betreffenden Kunststoff hergestellt sind.

Als geeignete Kunststoffe haben sich thermoplastische Kunststoffe als besonders günstig erwiesen, so dass sowohl die Basis als auch der Markierungsträger unschwer im Zusammenhang mit einem thermoplastischen Formungsprozess, beispielsweise durch Kunststoffspritzgießen, hergestellt werden können. Dadurch lassen sich die Kosten gering halten. Außerdem besteht hierdurch die Möglichkeit, die Basis und gegebenenfalls den Markierungsträger farbig anzulegen und an die entsprechenden Gestaltungswünsche anzupassen. Ebenso ist es denkbar den Markierungsträger und die Basis wahlweise einstückig oder zweiteilig auszubilden, was lediglich eine geringfügige Aussparung eines Spritzgießwerkzeuges erfordert.

Bei dem eingesetzten thermoplastischen Kunststoff handelt es sich um einen solchen, der im Allgemeinen UV-beständig ausgebildet wird, um die Farbechtheit und leichte Erkennbarkeit der auf diese Weise realisierten Markierungsvorrichtung auch im Außenbereich und auf langen Zeitskalen zu gewährleisten. Solche synthetischen und gegen Licht- und Wärmeeinwirkung stabilisierten Polymermassen sind seit langem bekannt und werden beispielhaft in der als Referenz in diesem Zusammenhang zitierten DE 2 264 582 A beschrieben. Heutzutage in der Praxis eingesetzte geeignete Kunststoffe sind typischerweise solche auf Basis von Styrol-Acrylnitrilcopolymeren oder allgemein Styrol-Acrylnitril-Basis. Tatsächlich kann beispielhaft und nicht einschränkend ein Kunststoff mit dem Markennamen "Luran" der Firma BASF eingesetzt werden, bei dem es sich um ein mit Acrylester-Kautschuk modifiziertes Styrol-Acrylnitrilcopolymer handelt. Besagter Kunststoff ist nicht nur schlagzäh, fest und leicht, sondern vor allem witterungsstabil. Außerdem lässt er sich in jeweils gewünschten Farben einfärben.

Wie bereits erläutert, können die Basis und der Markierungsträger einstückig aus Kunststoff hergestellt werden. Im Regelfall wird jedoch so vorgegangen, dass die Basis und/oder der Markierungsträger jeweils getrennt und für sich aus Kunststoff und/oder Metall produziert werden. Außerdem können die Basis und/oder der Markierungsträger eine jeweilige Bedruckung aufweisen. Über die Bedruckung kann nicht nur ein Logo oder eine Marke auf dem betreffenden Gegenstand angebracht werden, sondern lässt sich die Basis bzw. der zugehörige Markierungsträger auch beispielsweise über eine Nummer individualisieren. Auch ein Code in Gestalt beispielsweise eines QR-Codes kann unschwer aufgedruckt werden. Dadurch können die einzelnen Markierungsvorrichtungen individualisiert und mit beispielsweise zeichnerischen 3-D-Rohdaten abgeglichen werden bzw. die Rohdaten entsprechend durch die jeweils am Objekt angebrachten Markierungsvorrichtungen ergänzt werden.

Sofern die Basis und der Markierungsträger zweiteilig ausgebildet sind, besteht die weitere Möglichkeit, dass der Markierungsträger in eine Aufnahme der Basis lösbar eingesetzt ist. In diesem Fall ist die Basis an ihrer der Unterseite gegenüberliegenden Oberseite topfartig ausgebildet und mit der betreffenden Aufnahme ausgerüstet. Dadurch besteht die Möglichkeit, in die fragliche Aufnahme nicht nur den bereits beschriebenen Markierungsträger aus Kunststoff lösbar einzusetzen. Sondern der Markierungsträger kann alternativ oder zusätzlich auch magnetisch sowie aus Metall ausgebildet sein.

Um einen solchen magnetisch ausgebildeten Markierungsträger lösbar an der Basis festzulegen, verfügt die Basis vorteilhaft über eine magnetisierbare Metallplatte. Diese magnetisierbare Metallplatte findet sich an der Unterseite der Basis bzw. zwischen ihrem Boden und dem Klebeband. Das heißt, die Festlegung der Basis am Objekt bzw. dessen Oberfläche erfolgt nach wie vor über das beidseitige Klebeband, allerdings unter Zwischenschaltung der magnetisierbaren Metallplatte zur Basis hin. Auf diese Weise kommt es bei in die Aufnahme der Basis eingesetztem magnetisch ausgebildeten Markierungsträger zu einer magnetischen Anziehung zwischen dem fraglichen Markierungsträger und der magnetisierbaren Metallplatte, so dass der Markierungsträger lösbar in der Aufnahme der Basis gehalten wird.

Diese Vorgehensweise bietet den weiteren Vorteil, dass der magnetisch ausgebildete Markierungsträger aus der Basis bzw. dessen Aufnahme entfernt werden kann. Dadurch lassen sich hier unterschiedlich gestaltete magnetisch ausgebildete Markierungsträger anbringen, beispielsweise solche, die zur Halterung eines Spiegels ausgebildet sind, wie dies die einleitend bereits beschriebene DE 84 00 153 U1 erläutert. Auch andere Halterungen beispielsweise für einen Reflektor lassen sich mithilfe des magnetisch ausgebildeten Markierungsträgers lösbar an der Basis und damit im Referenzpunkt festlegen.

Um die Markierungsvorrichtung und den Referenzpunkt exakt abzubilden, wird zunächst eine Körnung an der Oberfläche des Objektes angebracht, wie dies die einleitend bereits im Detail beschriebene EP 1 568 965 B1 erläutert. Dadurch ist der Referenzpunkt festgelegt. Um nun die Markierungsvorrichtung an diesem Referenzpunkt am Objekt bzw. der Oberfläche des Objektes anzubringen, verfügen die Basis und/oder der Markierungsträger zusätzlich noch über eine Öffnung, durch die hindurch die Körnung beim Anbringen der Basis und/oder des Markierungsträgers von einer applizierenden Person erblickt und folglich die gewünschte Ausrichtung der Markierungsvorrichtung am Referenzpunkt gelingt. Selbstverständlich ist auch eine automatisierte Anbringung derart denkbar, dass über eine Kamera die Körnung erfasst und die Öffnung in der Basis bzw. im Markierungsträger entsprechend (mit einem Roboter) ausgerichtet wird.

Gegenstand der Erfindung ist auch eine Kombination der zuvor bereits beschriebenen Markierungsvorrichtung mit dem Ablösewerkzeug zum Entfernen der Basis von dem Objekt. Bei dem fraglichen Ablösewerkzeug handelt es sich im einfachsten Fall um einen manuell beaufschlagbaren Zweiarmhebel, der mit einem Manipulationshebelarm und einem Ablösehebelarm ausgebildet sein kann. Der Zweiarmhebel verfügt zu diesem Zweck vorteilhaft über ein angeschlossenes Drehlager zum Abstützen auf der Oberfläche des Objektes.

Das heißt, der Zweiarmhebel und das Drehlager definieren vorteilhaft eine Baueinheit, die einstückig aus beispielsweise Kunststoff oder Metall hergestellt sein kann. Mithilfe des Drehlagers stützt sich das Ablösewerkzeug an der Oberfläche des Objektes ab, so dass mithilfe des Manipulationshebelarmes manuell der Ablösehebelarm beaufschlagt werden kann, welcher seinerseits endseitig in den Unterschnitt der Basis eingreift. Dadurch kann die Basis problemlos von der Oberfläche des Objektes abgelöst werden, weil dies das beidseitig klebende Klebeband erlaubt.

Tatsächlich beobachtet man an dieser Stelle eine Klebkraft des Klebebandes im Bereich von 30 N/25 mm bis 40 N/25 mm. Die Dicke des Klebebandes liegt dabei typischerweise unterhalb von 600 µm, mag Werte von im Maximum 500 µm und meistens im Bereich von 200 µm bis 300 µm betragen. Die Reißkraft des Klebebandes wird im Allgemeinen im Bereich von ca. 30 N/cm bei einer Dehnbarkeit von bis zu 80 % angesiedelt. Das gilt selbstverständlich nur beispielhaft und wird typischerweise im Zusammenhang mit dem zuvor und einleitend bereits beschriebenen "Verlegeband rückstandsfrei entfernbar" der Firma tesa beobachtet.

Die an dieser Stelle vorgesehene Textilverstärkung des Klebebandes durch das Gewebe aus beispielsweise Polypropylen (PP) unterstützt dabei die rückstandsfreie Entfernung sowohl vom Objekt bzw. dessen Oberfläche als auch von der Unterseite der Basis. Schließlich gewährleistet die äußerst geringe Dicke des erfindungsgemäß eingesetzten beidseitigen Klebebandes, dass das Klebeband größtenteils transparent ausgebildet ist, so dass die typischerweise in der Basis vorgesehene mittige Öffnung zur Ausrichtung der Basis gegenüber der zuvor angebrachten Körnung nach wie vor möglich ist.

Das heißt, die Körnung kann durch die fragliche Öffnung trotz gleichsam zwischengeschaltetem beidseitig klebenden Klebeband von der applizierenden Person nach wie vor und unschwer erblickt werden, so dass sich die erfindungsgemäße Markierungsvorrichtung einwandfrei am mithilfe der Körnung definierten Referenzpunkt des Objektes festlegen lässt. Das gelingt auch und insbesondere dann, wenn die Markierungsvorrichtung beispielsweise "über Kopf" montiert werden soll. Durch die umlaufende Abschrägung ist darüber hinaus eine etwaige Stolpergefahr gebannt. Endlich kann bei einer Ausführungsform der magnetisch ausgebildete Markierungsträger problemlos entfernt werden, lässt sich folglich von einer applizierenden Person mitführen. Dadurch ist eine Anpassung an unterschiedliche Gegebenheiten und Anforderungen ebenso möglich wie eine Verhinderung eines etwaigen Verlustes. Hierin sind die wesentlichen Vorteile zu sehen.

Nachfolgend wird die Erfindung anhand einer lediglich ein Ausführungsbeispiel darstellenden Zeichnung näher erläutert; es zeigen:
- Fig. 1 bis 3: die erfindungsgemäße Markierungsvorrichtung in einer ersten Ausführungsform in Aufsicht (Fig. 1), in der Seitenansicht (Fig. 2) und perspektivisch (Fig. 3) und
- Fig. 4: ein abgewandeltes zweites Ausführungsbeispiel.

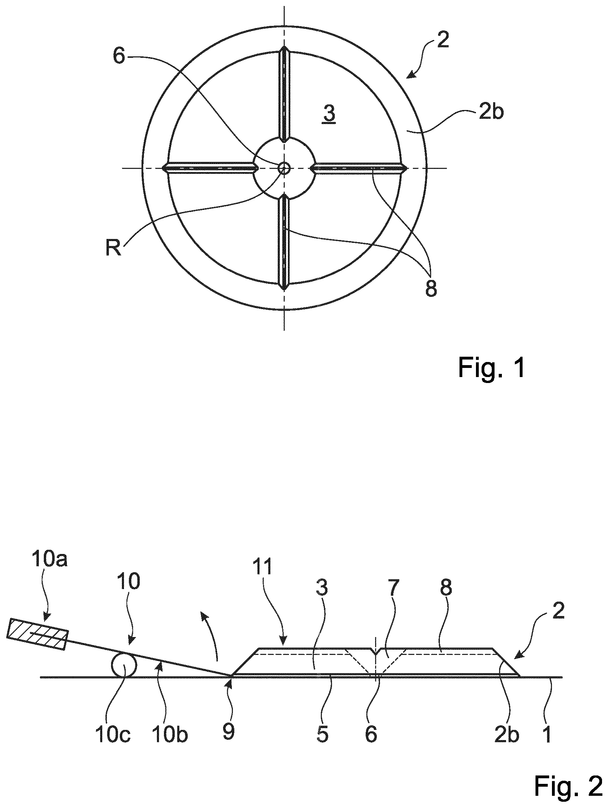

In den Figuren ist eine Markierungsvorrichtung zur Definition eines oder mehrerer Referenzpunkte R an einem Objekt 1 im Zuge der Objektvermessung dargestellt. Der Referenzpunkt R mag zu einer Körnung oder einem sonst wie angebrachten Punkt bzw. Markierung auf der Oberfläche des Objektes 1 korrespondieren. Bei dem Objekt 1 handelt es sich entsprechend der beispielhaften Wiedergabe in der Fig. 2 um eine Wand oder Oberfläche des betreffenden Objektes, das seinerseits als Gebäude, Schiff oder Fahrzeug ausgebildet ist oder sein kann. Jedenfalls erfordert das Objekt 1 in der Regel den Vergleich von durch die Konstruktion vorgegebenen Messdaten mit tatsächlichen und am Objekt 1 abgenommenen Messpunkten. Dazu ist die Markierungsvorrichtung in ihrem grundsätzlichen Aufbau mit einer Basis 2 ausgerüstet, die mit dem Objekt 1 verbindbar ist. Darüber hinaus ist noch ein Markierungsträger 3 realisiert, der mit der Basis 2 gekoppelt ist bzw. mit der Basis 2 gekoppelt werden kann.

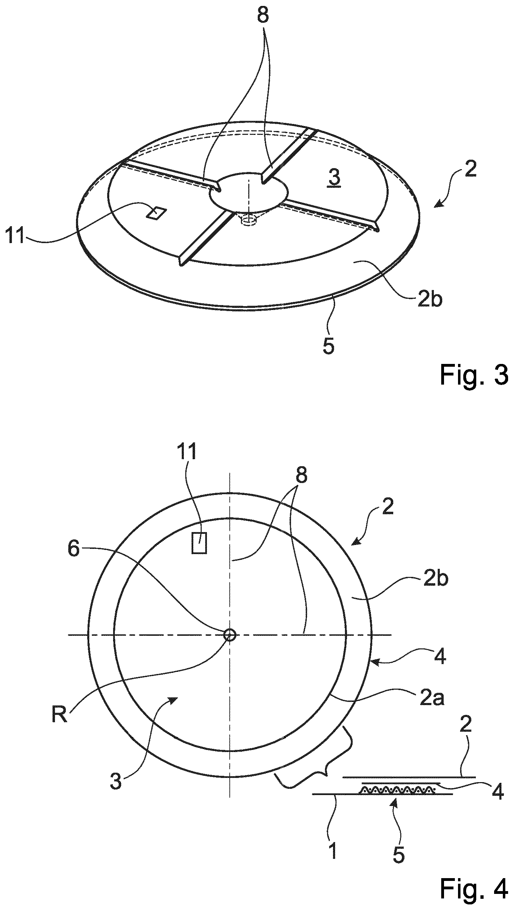

Bei der Variante nach den Fig. 1 bis 3 sind die Basis 2 und der Markierungsträger 3 miteinander verbunden, nämlich nach dem Ausführungsbeispiel einstückig aus Kunststoff hergestellt. Demgegenüber geht die Variante entsprechend der Fig. 4 so vor, dass in diesem Fall die Basis 2 und der Markierungsträger 3 getrennt voneinander und folglich zweiteilig ausgebildet sind. In diesem Fall ist der Markierungsträger 3 in eine Aufnahme 2a der Basis 2 lösbar eingesetzt. Tatsächlich ist in dem betreffenden Ausführungsbeispiel nach der Fig. 4 der Markierungsträger 3 magnetisch ausgebildet und verfügt die Basis 2 über eine magnetisierbare Metallplatte 4, wie man anhand der zu der Fig. 4 zugehörigen Schnittdarstellung nachvollziehen kann.

Sämtlichen Ausführungsbeispielen ist gemein, dass die Basis 2 mittels eines beidseitig klebenden Klebebandes 5 rückstandsfrei an dem Objekt 1 festgelegt werden kann. Das Klebeband 5 verfügt dabei insbesondere über eine Dicke von weniger als 600 µm, kann beispielhaft eine Dicke im Bereich zwischen 200 µm und 300 µm aufweisen. Sofern an dieser Stelle die magnetisierbare Metallplatte 4 nicht realisiert ist, wie dies beim Ausführungsbeispiel der Fig. 1 bis 3 der Fall ist, befindet sich das beidseitig klebende Klebeband 5 zwischen der Basis 2 und dem Objekt 1 bzw. dessen Oberfläche. Dazu wird das betreffende Klebeband 5 in der Regel an eine Unterseite der Basis 2 mit seiner einen Klebebeschichtung angeklebt und ist die andere dann freie Klebebeschichtung beispielsweise mit einem sogenannten Liner bzw. einer Abziehfolie abgedeckt.

Um nun die Basis 2 im Referenzpunkt R am Objekt 1 festzulegen, wird zunächst die fragliche Abziehfolie bzw. der Liner entfernt, so dass die nach unten weisende Beschichtung bzw. Klebebeschichtung des beidseitig klebenden Klebebandes 5 freiliegt. Die Ausrichtung der Basis 2 am Objekt 1 im Referenzpunkt R erfolgt seitens einer applizierenden Person derart, dass nach dem Ausführungsbeispiel die Basis 2 und/oder der Markierungsträger 3 jeweils mit einer meistens zentralen Öffnung 6 ausgerüstet sind. Diese Öffnung 6 findet sich nach dem Ausführungsbeispiel fußseitig in einer trichterförmigen Einformung 7 im Markierungsträger 3 im Ausführungsbeispiel nach den Fig. 1 bis 3 oder ist beim Ausführungsbeispiel nach der Fig. 4 am Boden der dortigen Aufnahme 2a vorgesehen. Dabei findet sich die fragliche Öffnung 6 jeweils zentral in der Basis 2 bzw. dem Markierungsträger 3, welche für sich genommen jeweils kreisförmig ausgebildet sind. Ein an dieser Stelle zusätzlich angedeutetes Fadenkreuz 8 mit der Öffnung 6 im Mittelpunkt stellt sicher, dass die Applikation einfach gelingt. Denn hierzu ist es lediglich erforderlich, die Basis 2 bzw. den Markierungsträger 3 mit der Öffnung 6 in Deckung zu einer zuvor angebrachten Körnung bzw. dem Referenzpunkt R an der Oberfläche des Objektes 1 auszurichten, die bzw. der durch die Öffnung 6 unschwer anvisiert werden kann.

Das in den Figuren lediglich stilisiert dargestellte beidseitige Klebeband 5 ist insgesamt textilverstärkt ausgebildet, verfügt nämlich über ein angedeutetes Gewebe als Verstärkung. Das Gewebe kann aus einem Kunststoff bzw. Kunststofffäden hergestellt sein, beispielsweise solchen aus Polypropylen. Außerdem wird das Gewebe beispielhaft in offenporiger Leinwandbindung zur Verfügung gestellt. Bei dem Kleber für die beidseitige Beschichtung handelt es sich um eine lösemittelfreie Acrylatklebemasse bzw. Acrylhaftklebemasse mit den in der Beschreibungseinleitung im Detail erläuterten Eigenschaften.

Die Basis 2 verfügt über eine randseitige Abschrägung 2b als Stolperschutz. Außerdem ist die Abschrägung 2b nach dem Ausführungsbeispiel und entsprechend der Darstellung in der Fig. 2 mit einem Unterschnitt 9 ausgerüstet. Bei dem Unterschnitt 9 handelt es sich im Ausführungsbeispiel um eine randseitige Einkerbung in der Abschrägung 2b bzw. in der Basis 2, die sich zur Unterseite der Basis 2 hin öffnet, so dass an dieser Stelle ein lediglich in der Fig. 2 angedeutetes Ablösewerkzeug 10 angesetzt werden kann.

Tatsächlich ist das Ablösewerkzeug 10 als Zweiarmhebel mit einem Manipulationshebelarm 10a und einem Ablösehebelarm 10b ausgebildet. Außerdem ist der Zweiarmhebel dann noch mit einem angeschlossenen Drehlager 10c ausgerüstet, um auf diese Weise das Ablösewerkzeug 10 auf der Oberfläche des Objektes 1 abstützen zu können, wie dies insbesondere die Darstellung in der Fig. 2 deutlich macht. Der Zweihebelarm bzw. der Manipulationshebelarm 10a und der Ablösehebelarm 10b können in Verbindung mit dem Drehlager 10c insgesamt einstückig aus beispielsweise Metall oder Kunststoff oder aus beiden Materialien hergestellt sein. Mithilfe des Manipulationshebelarmes 10a kann ein Werker die Basis 2 unschwer und rückstandsfrei von dem Objekt 1 lösen. Dazu ist es lediglich erforderlich, dass die Spitze des Ablösehebelarmes 10b in den bereits angesprochenen Unterschnitt 9 an der Abschrägung 2b bzw. fußseitig der Basis 2 eingreift um auf diese Weise die gewünschte Hebelwirkung erzeugen zu können.

Die auf diese Weise vom Objekt 1 abgelöste Markierungsvorrichtung bzw. die Basis 2 kann anschließend wieder verwendet werden. Dazu ist es lediglich erforderlich, das unterseitig an die Basis 2 angeklebte beidseitig bzw. doppelseitig klebende Klebeband 5 zu entfernen. Das gelingt unschwer, so dass die Basis 2 anschließend mit einem neuen doppelseitigen Klebeband 5 ausgerüstet und wieder verwendet werden kann

Da das doppelseitige Klebeband 5 über eine Materialstärke von im Maximum 600 µm und vorzugsweise im Bereich von 200 µm bis 300 µm verfügt und im Übrigen mit dem Gewebe als Verstärkung zwischen den beiden Schichten bzw. Beschichtungen aus dem übereinstimmenden Kleber ausgerüstet ist, kann eine applizierende Person den Referenzpunkt R bzw. die Körnung an der Oberfläche des Objektes 1 auch dann durch die Öffnung 6 erblicken, wenn das beidseitig klebende Klebeband 5 unterseitig an die Basis 2 angeklebt ist. Dazu ist es lediglich erforderlich, die in der Beschreibungseinleitung bereits angesprochene Abziehfolie von der dem Objekt zugewandten Klebebeschichtung des Klebebandes 5 zu entfernen.

Im Rahmen der Variante nach der Fig. 4 sind - wie bereits beschrieben - die Basis 2 und der Markierungsträger 3 getrennt und zweiteilig ausgelegt. Hier hat es sich als besonders günstig erwiesen, wenn der Markierungsträger 3 magnetisch ausgebildet ist. Durch die an dieser Stelle zwischen dem Klebeband 5 und der Unterseite der Basis 2 vorgesehene Metallplatte 4 entsprechend der Schnittdarstellung in der Fig. 4 kommt es zu einer magnetischen Anziehung zwischen dem magnetisch ausgebildeten Markierungsträger 3 und der magnetisierbaren Metallplatte 4. Dadurch ist sichergestellt, dass der magnetisch ausgebildete Markierungsträger 3 in diesem Fall nicht aus der Aufnahme 2a in der Basis 2 herausfällt.

Bei der Variante nach den Fig. 1 bis 3 sind dagegen die Basis 2 und der Markierungsträger 3 einstückig aus Kunststoff ausgebildet. Bei dem Kunststoff für die Basis 2 und gegebenenfalls den Markierungsträger 3 handelt es sich um einen thermoplastischen sowie UV-beständigen Kunststoff. Dieser kann beispielhaft auf Styrol-Acrylnitril-Basis hergestellt sein, wie dies einleitend bereits beschrieben wurde. Derartige Kunststoffe lassen sich nicht nur farbig anlegen, sondern können auch bedruckt werden. An dieser Stelle wird meistens mit einer Bedruckung 11 auf bzw. am Markierungsträger 3 bzw. der Basis 2 gearbeitet, wie sie in den Figuren lediglich angedeutet ist. Die Bedruckung 11 kann dabei als QR-Code ausgebildet sein, um die Markierungsvorrichtung eindeutig zu individualisieren und beispielsweise mit den dreidimensionalen Rohdaten in den Konstruktionszeichnungen zu verknüpfen.

## Patentansprüche

1. Markierungsvorrichtung zur Definition eines oder mehrerer Referenzpunkte (R) an einem Objekt (1) im Zuge der Objektvermessung, mit einer Basis (2), und mit zumindest einem Markierungsträger (3) zur Festlegung des Referenzpunktes (R), wobei die Basis (2) mit dem Objekt (1) verbindbar ist,
und wobei die Basis (2) mittels eines beidseitig klebenden Klebebandes (5), an dem Objekt (1) rückstandsfrei festlegbar ist,
**dadurch gekennzeichnet, dass**
die Basis (2) eine randseitige Abschrägung (2b) als beispielsweise Stolperschutz aufweist, wobei
die Abschrägung (2b) wenigstens einen Unterschnitt (9) zum Eingriff für ein Ablösewerkzeug (10) aufweist.

2. Vorrichtung nach Anspruch 1, **dadurch gekennzeichnet, dass** das beidseitig klebende Klebeband eine Dicke von weniger als 600 µm aufweist.

3. Vorrichtung nach Anspruch 1 oder 2, **dadurch gekennzeichnet, dass** das beidseitige Klebeband (5) textilverstärkt ausgebildet ist, beispielsweise ein Gewebe als Verstärkung aufweist.

4. Vorrichtung nach Anspruch 3, **dadurch gekennzeichnet, dass** das Gewebe aus Kunststofffäden, beispielsweise solchen aus Polypropylen (PP), hergestellt ist.

5. Vorrichtung nach einem der Ansprüche 1 bis 4, **dadurch gekennzeichnet, dass** als Kleber für die beidseitige Beschichtung bei dem Klebeband (5) eine lösungsmittelfreie Acrylklebemasse und insbesondere Acrylhaftklebemasse zum Einsatz kommt.

6. Vorrichtung nach einem der Ansprüche 1 bis 5, **dadurch gekennzeichnet, dass** die Basis (2) kreisförmig und die Abschrägung (2b) als Kreisringschräge ausgebildet ist.

7. Vorrichtung nach einem der Ansprüche 1 bis 6, **dadurch gekennzeichnet, dass** die Basis (2) aus einem thermoplastischen Kunststoff hergestellt ist.

8. Vorrichtung nach Anspruch 7, **dadurch gekennzeichnet, dass** der Kunststoff UV-beständig, beispielsweise auf Styrol-Acrylnitril-Basis, ausgebildet ist.

9. Vorrichtung nach einem der Ansprüche 1 bis 8, **dadurch gekennzeichnet, dass** die Basis (2) und der Markierungsträger (3) einstückig aus Kunststoff hergestellt sind.

10. Vorrichtung nach Anspruch 9, **dadurch gekennzeichnet, dass** die Basis (2) und/oder der Markierungsträger (3) eine Bedruckung (11) aufweisen.

11. Vorrichtung nach einem der Ansprüche 1 bis 10, **dadurch gekennzeichnet, dass** die Basis (2) und der Markierungsträger (3) zweiteilig ausgebildet sind.

12. Vorrichtung nach Anspruch 11, **dadurch gekennzeichnet, dass** der Markierungsträger (3) in eine Aufnahme (2a) der Basis (2) lösbar eingesetzt ist.

13. Vorrichtung nach Anspruch 11 oder 12, **dadurch gekennzeichnet, dass** der Markierungsträger (3) magnetisch ausgebildet ist und die Basis (2) eine magnetisierbare Metallplatte (4) zwischen ihrem Boden und dem Klebeband (5) aufweist.

14. Kombination einer Markierungsvorrichtung nach einem der Ansprüche 1 bis 13 und einem Ablösewerkzeug (10) zum Entfernen der Basis (2) von dem Objekt (1).

## Claims

1. Marking apparatus for defining one or more reference points (R) on an object (1) during objective measurement, having a base (2) and with at least one bezel (3) for fixing the reference point (R), wherein the base (2) is connectable to the object (1),
and wherein the base (2) can be affixed to the object (1) without leaving any residue by means of a double-sided adhesive tape (5),
**characterized in that**
the base (2) has a bevel (2b) on the edge, to serve as protection against tripping, for example, wherein
the bevel (2b) has at least one undercut (9) for engagement by a removal tool (10).

2. Apparatus according to Claim 1, **characterized in that** the double-sided adhesive tape has a thickness of less than 600 µm.

3. Apparatus according to Claim 1 or 2, **characterized in that** the double-sided adhesive tape (5) is textile-reinforced, for example has a fabric as reinforcement.

4. Apparatus according to Claim 3, **characterized in that** the fabric is produced from plastic threads, for example threads made of polypropylene (PP).

5. Apparatus according to any one of Claims 1 to 4, **characterized in that** a solvent-free acrylic adhesive and in particular an acrylic pressure-sensitive adhesive is used as the adhesive for the double-sided coating of the adhesive tape (5).

6. Apparatus according to any one of Claims 1 to 5, **characterized in that** the base (2) is circular and the bevel (2b) is designed as a circular ring bevel.

7. Apparatus according to any one of Claims 1 to 6, **characterized in that** the base (2) is made of a thermoplastic material.

8. Apparatus according to Claim 7, **characterized in that** the plastic is UV-resistant, for example based on styrene-acrylonitrile.

9. Apparatus according to any one of Claims 1 to 8, **characterized in that** the base (2) and the bezel (3) are made from plastic as a single part.

10. Apparatus according to Claim 9, **characterized in that** the base (2) and/or the bezel (3) has/have a printed region (11).

11. Apparatus according to any one of Claims 1 to 10, **characterized in that** the base (2) and the bezel (3) are constructed in two parts.

12. Apparatus according to Claim 11, **characterized in that** the bezel (3) is inserted detachably in a receptacle (2a) in the base (2).

13. Apparatus according to Claim 11 or 12, **characterized in that** the bezel (3) is magnetic, and the base (2) has a magnetisable metal plate (4) between its bottom and the adhesive tape (5).

14. Combination of a marking apparatus according to any one of Claims 1 to 13 and a removal tool (10) for removing the base (2) from the object (1).

## Revendications

1. Dispositif de marquage, destiné à définir un ou plusieurs points de référence (R) sur un objet (1) au fur et à mesure du mesurage de l'objet, doté d'une base (2) et doté d'au moins un support de marquage (3) pour fixer le point de référence (R), la base (2) pouvant être assemblée avec l'objet (1),
et la base (2) pouvant être fixée sans résidu sur l'objet (1), au moyen d'un ruban adhésif (5) double face,
**caractérisé en ce que**
la base (2) comporte un chanfrein (2b) de bordure, faisant office par exemple de protection anti-trébuchements,
la chanfrein (2b) comporte au moins une contre-dépouille (9), pour y engager un outil de détachement (10).

2. Dispositif selon la revendication 1, **caractérisé en ce que** le ruban adhésif double face présente une épaisseur de moins de 600 µm.

3. Dispositif selon la revendication 1 ou 2, **caractérisé en ce que** le ruban adhésif (5) double face est conçu en étant renforcé par textile, comporte par exemple un tissu en tant que renfort.

4. Dispositif selon la revendication 3, **caractérisé en ce que** le tissu est fabriqué à partir de fils en matière plastique, par exemple de tels en polypropylène (PP).

5. Dispositif selon l'une quelconque des revendications 1 à 4, **caractérisé en ce qu'**en tant qu'agent adhésif pour le revêtement double face du ruban adhésif (5) est utilisée une masse adhésive acrylique et notamment une masse auto-adhésive.

6. Dispositif selon l'une quelconque des revendications 1 à 5, **caractérisé en ce que** la base (2) est conçue de forme circulaire et le chanfrein (2b) est conçu sous la forme d'un chanfrein en anneau circulaire.

7. Dispositif selon l'une quelconque des revendications 1 à 6, **caractérisé en ce que** la base (2) est fabriquée en une matière thermoplastique.

8. Dispositif selon la revendication 7, **caractérisé en ce que** la matière plastique est résistante aux UV, est conçue par exemple sur la base d'un styrène-acrylonitrile.

9. Dispositif selon l'une quelconque des revendications 1 à 8, **caractérisé en ce que** la base (2) et le support de marquage (3) sont fabriqués en monobloc en une matière plastique.

10. Dispositif selon la revendication 9, **caractérisé en ce que** la base (2) et/ou le support de marquage (3) comportent une impression (11).

11. Dispositif selon l'une quelconque des revendications 1 à 10, **caractérisé en ce que** la base (2) et le support de marquage (3) sont conçus en deux parties.

12. Dispositif selon la revendication 11, **caractérisé en ce que** le support de marquage (3) est inséré de manière amovible dans un logement (2a) de la base (2).

13. Dispositif selon la revendication 11 ou 12, **caractérisé en ce que** le support de marquage (3) est conçu sous forme magnétique et la base (2) comporte entre son fond inférieur et le ruban adhésif (5) une plaque métallique (4) magnétisable.

14. Association d'un dispositif de marquage selon l'une quelconque des revendications 1 à 13 et d'un outil de détachement (10) destiné à retirer la base (2) de l'objet (1).
